# EUROPEAN PATENT SPECIFICATION

(11) **EP 1 228 641 B1**
(45) Date of publication and mention of the grant of the patent: **20.08.2003**
(21) Application number: 00993085.0
(22) Date of filing: 25.10.2000
(51) Int. Cl.: H04N 7/15

(54) **TELEVISION VIDEO CONFERENCING SYSTEMS**
FERNSEHVIDEOKONFERENZSYSTEM
SYSTEMES DE VIDEO CONFERENCE TELEVISEE

(30) Priority: 29.10.1999 US 162450 P
(43) Date of publication of application: 07.08.2002
(73) Proprietor: United Video Properties, Inc., Tulsa, OK 74136 (US)
(72) Inventor: ELLIS, Michael, D., Boulder, CO 80304 (US); TREYZ, G., Victor, Sunnyvale, CA 94087 (US)
(74) Representative: Reeve, Anna Elizabeth
(86) International application number: US0041523
(87) International publication number: WO01047262

(56) References cited:
- WO-A-99/53691
- US-A- 5 907 604
- GERFELDER N: "VIDEO APPLICATION IN MULTIMEDIA SYSTEMS AND COMPUTER NETWORKS" SMPTE JOURNAL,US,SMPTE INC. SCARSDALE, N.Y, vol. 105, no. 11, 1 November 1996 (1996-11-01), pages 689-697, XP000635993 ISSN: 0036-1682
- WALKER G: "THE MIRROR-REFLECTIONS ON INHABITED TV" BRITISH TELECOMMUNICATIONS ENGINEERING,GB,BRITISH TELECOMMUNICATIONS ENGINEERING. LONDON, vol. 16, no. PART 01, 1 April 1997 (1997-04-01), pages 29-38, XP000689582 ISSN: 0262-401X

## Description

### Background of the Invention

This invention relates to television systems, and more particularly, to television systems in which television viewers may participate in live television broadcasts using video conferencing.

Set-top boxes with cable modems are being developed. Such a device is disclosed in an August 23, 1998 press release by ATI Technologies, Inc., entitled "ATI Technologies Inc. Selected by General Instrument to supply Graphics Chips for GI's Advanced Digital Interactive Set-top Terminals." Set-top boxes are also being developed to which video cameras may be attached.

Such set-top box arrangements and certain personal computer equipment may be used to gather video information.

It is an object of the present invention to provide arrangements in which a television viewer may participate in a talk show or the like using video conferencing.

### Summary of the Invention

In accordance with the present invention which is defined by claims 1 and 24, a video conferencing system is provided that allows viewers to establish video conference calls with television studios that allow the viewers to participate in a television program (e.g., a talk show or the like). Video conference calls to a television studio may be established using any suitable user equipment, such as a personal computer arrangement or an arrangement based on a set-top box or the like. Such user equipment may receive video from an associated video camera and a display for displaying various video components.

A studio may monitor incoming videos for objectionable content. Objectionable content may be blocked or removed from the video.

Program listings information for television programs that support video conferencing may be displayed on the display of the user equipment for viewing by a user. The user may select a desired program from those displayed on the display. The program may be selected, for example, by using a movable highlight region and an OK key or by clicking on the desired program listing.

The user may be provided with an opportunity to schedule a time at which to participate in a television video conference. If many callers wish to participate in a given program, the studio may negotiate with each party to determine a suitable order in which the callers may participate.

The user may add special effects at the user device. For example, the user device may add a border around the user's video, may change colors in the video, may add wipes, fades, etc.

The user may spawn or join chat sessions regarding the television program. The user may participate in such chat sessions while the television program is being broadcast.

Further features of the invention, its nature and various advantages will be more apparent from the accompanying drawings and the following detailed description of the preferred embodiments.

### Brief Description of the Drawings

FIG. 1 is a diagram of an illustrative television video conferencing system in accordance with the present invention.
FIG. 2 is a diagram of illustrative user television equipment in accordance with the present invention.
FIG. 3 is a diagram of additional illustrative user television equipment in accordance with the present invention.
FIG. 4 is a flow chart of illustrative steps involved in participating in a television video conference in accordance with the present invention.
FIG. 5 is a flow chart of illustrative steps involved in screening objectionable content from a user's video before providing that video as part of a broadcast television program in accordance with the present invention.
FIG. 6 shows an illustrative menu screen that may be provided by an interactive television program guide or other interactive television application in accordance with the present invention.
FIG. 7 shows an illustrative program listings screen for programs with video call-in capabilities in accordance with the present invention.
FIG. 8 shows an illustrative screen of options that may be used by a user to sign up for participation in a given video conference television program in accordance with the present invention.
FIG. 9 shows an illustrative screen that may be displayed for the user after the user signs up for participation in a television video conference in accordance with the present invention.
FIG. 10 shows an illustrative screen containing video for a broadcast television program and local video and various television video conferencing options in accordance with the present invention.
FIG. 11 is a flow chart of illustrative steps involved in performing various television video conference functions in accordance with the present invention.
FIG. 12 shows an illustrative screen that may be displayed during a chat session related to a television program with video conferencing participation in accordance with the present invention.

### Detailed Description of the Preferred Embodiments

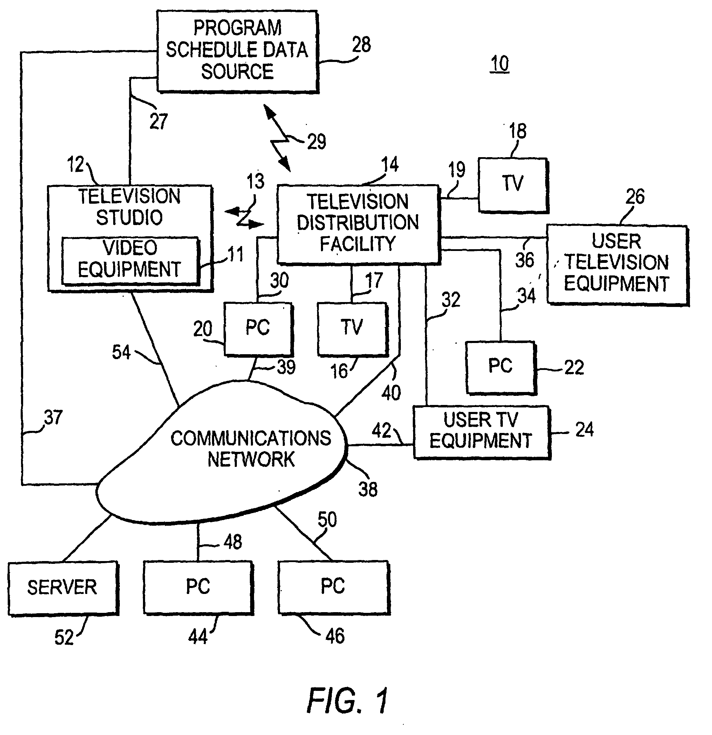

An illustrative television video conferencing system 10 in accordance with the present invention is shown in FIG. 1. Television programming may be created using television production facilities at television studio 12. Equipment such as video cameras, video recorders, editing equipment, and the like may be used during the production process. Television programming from studio 12 may be provided to users at televisions and various user equipment via multiple television distribution facilities such as television distribution facility 14. Only one such television distribution facility 14 is shown in FIG. 1 to avoid over complicating the drawing. Television distribution facility 14 may be a terrestrial broadcast television facility, a satellite facility, a cable system headend, or any other facility suitable for distributing television programming to users.

Television studio 12 may distribute television programming to television distribution facility 14 using any suitable communications link 13, such as a satellite link, fiber-optic link, a cable link, a combination of such links or any other suitable communications paths.

Users may use various types of user equipment to receive television programming from television distribution facility 14. For example, televisions such as televisions 16 and 18 may be used to receive programming over paths 17 and 19. Users may use personal computers with television tuner cards such as personal computers 20 and 22 to receive television programming over paths 30 and 34. User television equipment such as user television equipment 24 and 26 may be used to receive programming over paths 32 and 36. Such user television equipment may, for example, be based on set-top box arrangements or arrangements using digital video recorders or the like.

Any suitable paths may be used to distribute television programming from television distribution facility 14 to the user equipment devices. For example, paths 17 and 19 may be free-space paths for broadcast television or satellite transmissions. Paths 17 and 19 may also be cable paths from a cable system headend. Paths 30 and 34 may be free-space paths, cable paths, or satellite links. Paths 32 and 36 may be free-space paths for broadcast television or satellite transmissions, cable paths from a cable system headend, etc.

Television studio 12 may provide information on its programming schedule to program schedule data sources such as program schedule data source 28 over path 27. Path 27 may be, for example, an Internet link, a cable or fiber-optic link, a satellite link, etc., or a verbal telephone connection, a computer telephone connection, a human operated facsimile connection, or any other suitable connection.

Program schedule information may be distributed from program schedule data source 28 to multiple television distribution facilities such as television distribution facility 14 in parallel over path 29. Path 29 may be any suitable communications path such as a satellite path, cable or fiber-optic path, etc.

Television distribution facility 14 may distribute program schedule information received from program schedule data source 28 to the user television equipment 24 and 26 and personal computer equipment 20 and 22 that is associated with the television distribution facility 14 over communications paths 30, 32, 34, and 36. Program schedule information may be transmitted using any suitable approach, including vertical blanking interval transmissions, side-band transmissions, digital packet data stream transmissions, etc.

Program schedule information may also be distributed to personal computer 20 from program schedule data source 28 over communications path 37 and communications network 38 and path 39. Communications network 38 may be any suitable communications network, such as the Internet, etc.

Personal computer 22 may receive program schedule information from program schedule data source 28 via path 37, communications network 38, path 40, and path 34. With this type of arrangement, for example, data transmissions over path 34 may involve use of a' cable modem or the like.

User television equipment 24 may receive program schedule information from program schedule data source using path 37, communications network 38, path 40, and path 32. Such communications over path 32 may involve use of a cable modem or the like at user television equipment 24.

User television equipment 24 may also receive program schedule information from program schedule data source 28 via communications path 37, communications network 38, and communications path 42. Communications path 42 may be a telephone path or the like and may use a telephone modem, digital subscriber line (DSL) modem, integrated services digital network (ISDN) modem, a wireless modem, etc.

Personal computers 44 and 46 may receive program schedule information over path 37, communications network 38, and communications paths 48 and 50. Path 37 may be any suitable communications path, such as a satellite path, fiber-optic path, cable or other wired path, a combination of such paths, etc. Paths 48 and 50 may involve, for example, telephone lines or the like. Personal computers 44 and 46 may connect to communications network 38 using any suitable arrangement, such as telephone modems, DSL modems, ISDN modems, etc.

User equipment devices such as user television equipment and personal computers may use the program schedule information to access program listings of interest to the user. An interactive television program guide or other suitable application may be used' to display program listings on the user's display. An on-line program guide may be provided by a server connected to communications network 38 such as server 52, which may receive program schedule information from studios or from program schedule data source 28.

If desired, television studio 12 may distribute television programming over communications network 38 using path 54. Path 54 may be a satellite path, a cable or fiber-optic path, a combination of such paths, or any other suitable paths.

Television programming that is provided to communications network 38 may be distributed to users at personal computers 44 and 46 using Internet paths or other communications paths and cable modems or the like. Television programming that is provided to communications network 38 may also be distributed to personal computer 20, personal computer 22, user television equipment 24, and user television equipment 26 in this way by using path 40 and cable modem links or the like from television distribution facility 14 to the user equipment. Television programming that is provided to communications network 38 may be distributed to personal computer 20 using path 39.

Users at personal computers 44, 46, 20, and 26, and at user television equipment 24 and 26 may transmit video to television studio 12 using various communications paths. For example, users at personal computers 48 and 50 may transmit video to television studio 12 over communications paths 48 and 50, communication network 38, and path 54.

A user at personal computer 20 may transmit video to television studio 12 over path 39, communications network 38, and path 54. A user at personal computer 20 may also transmit video to television studio 12 over path 30, television distribution facility 14, path 40, communications network 38, and path 54. A user at personal computer 22 may transmit video to television studio 12 over path 34, television distribution facility 14, path 40, communications network 38, and path 54.

A user at user television equipment 24 may transmit video to television studio 12 over path 42, communications network 38, and path 54. A user at user television equipment 24 may also transmit video to television studio 12 over path 34, television distribution facility 14, path 40, communications network 38, and path 54. A user at user television equipment 26 may transmit video to television studio 12 over path 36, television distribution facility 14, path 40, communications network 38, and path 54.

Users at televisions such as televisions 16 and 18 may receive television programming over paths 17 and 19 and may use ancillary personal computer equipment or the like to transmit videos to television studio 12.

User television equipment such as user television equipment 24 and 26 may be based on set-top boxes, personal computer televisions (PC/TVs), digital video recorders, a WebTV platform, or any other suitable arrangement.

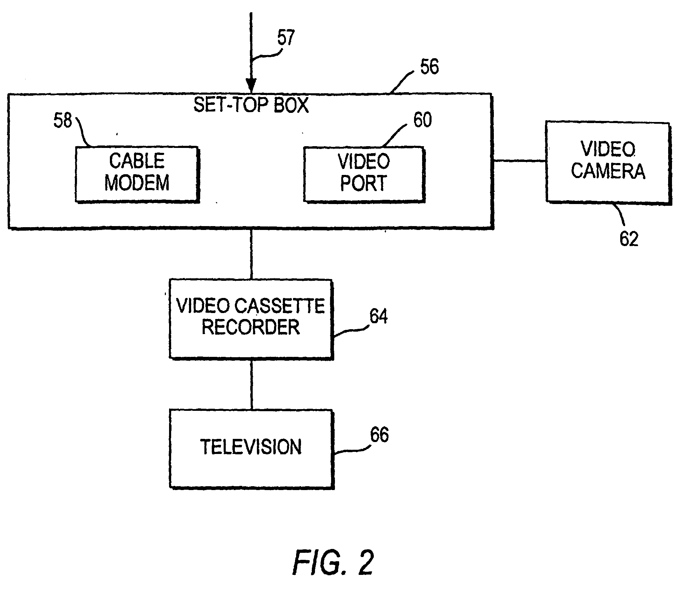

Illustrative user television equipment based on a set-top box arrangement is shown in FIG. 2. Set-top box 56 may include television tuner circuitry that allows a user at set-top box 56 to tune to a desired television channel received from television distribution facility 14 over path 57. The television tuner circuitry may include circuitry suitable for tuning to analog or digital channels.

Set-top box 56 may also include communications circuitry such as cable modem 56. Other suitable communications circuitry that may be provided includes a telephone modem, a DSL modem, an ISDN modem, etc. If desired, the communications circuitry may be used to receive streaming television video feeds over the Internet from studio 12.

A video port 60 may be provided to receive video from a video camera 62 or other video source (e.g., video editing equipment or a computer). Video port 60 may, for example, be an IEEE 1394 port or the like. If desired, images may be received from a digital still camera. Set-top box 56 may also receive data, software, and other digital information from the user using port 60 or other ports.

Video camera 62 may be a digital video camera. Video camera 62 may be separate from set-top box 56 or may be integrated into set-top box 56. Video camera 62 may be a stand-alone video camera or may be part of another electronic device (e.g., a notebook computer). More than one video camera may be used if desired. The video provided by video camera 62 may include audio.

A videocassette recorder 64 may be used to record video signals such as video from video camera 62. Videocassette recorder 64 may also record television programs.

Video content such as video from video camera 62, television programs received from set-top box 56, and Internet video may be displayed on television 66. Television 66 may also be used to display text, graphics, and video that is generated by an interactive television program guide or other application running on set-top box 56. If desired, such applications may be run locally using the processing capabilities of set-top box 56 or may be implemented using a client-server architecture in which set-top box 56 serves as a client processor whereas a server at television distribution facility 14 or other suitable location serves as a server processor.

An interactive program guide application may allow the user to view program schedule information received from program schedule data source 28. The program guide may allow the information to be organized by time, by channel, by category, etc. For example, the user may use the program guide to display program listings for all television programs scheduled to air at 9:00 PM. The user may also use the program guide to display television program listings for all television programs that are scheduled to appear on channel 4. If desired, the television program guide may be used to identify'and display program listings for all television programs related to sports, all television programs related to movies, all programs related to news, etc.

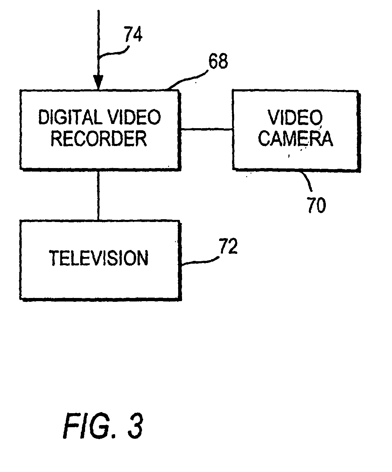

Another suitable user television equipment arrangement is shown in FIG. 3. The user television equipment of FIG. 3 has a digital video recorder 68 and a television 72. Digital video recorder 68 may include television tuner circuitry that allows a user at digital video recorder 68 to tune to a desired television channel received from television distribution facility 14 over path 57. The television tuner circuitry may include circuitry suitable for tuning to analog or digital channels.

Digital video recorder 68 may also include communications circuitry such as a cable modem or the like. Other suitable communications circuitry that may be provided includes a telephone modem, a DSL modem, an ISDN modem, etc. If desired, the communications circuitry may be used to receive streaming television video feeds over the Internet from studio 12.

A video port may be provided to receive video from a video camera 70 or other video source (e.g., video editing equipment or a computer). Such a video port may, for example, be an IEEE 1394 port or the like. If desired, images may be received from a digital still camera. Digital video recorder 68 may also receive data, software, and other digital information from the user using suitable ports.

Video camera 70 may be a digital video camera. Video camera 70 may be separate from digital video recorder 68 or may be integrated into digital video recorder 68. Video camera 70 may be a stand-alone video camera or may be part of another electronic device (e.g., a notebook computer). More than one video camera may be used if desired. The video provided by video camera 70 may include audio.

Digital video recorder 68 may contain a video encoder that coverts analog or digital video into digital data and may also contain a hard disk drive or other suitable digital storage that may be used to record video signals such as video from video camera 70. Digital video recorder 68 may also record television programs.

Video content such as video from video camera 70, television programs received from digital video recorder 68, and Internet video may be displayed on television 72. Television 72 may also be used to display text, graphics, and video that is generated by an interactive television program guide or other application running on digital video recorder 68. If desired, such applications may be run locally using the processing capabilities of digital video recorder 68 or may be implemented using a client-server architecture in which digital video recorder 68 serves as a client processor whereas a server at television distribution facility 14 or other suitable location serves as a server processor.

Television studio 12 may produce talk shows and other television programs that benefit from user interaction. During the broadcast of a television program, users with user television equipment, personal computer equipment, or other suitable user equipment may place video calls to studio 12. At studio 12, the video image of the user may be patched into the television program, so that the user's comments may be viewed by all the viewers who are currently watching the television program on their televisions. Video conferencing equipment, editing equipment, and television broadcasting equipment may be used at studio 12 to perform operation such as blocking objectionable content and patching the user into the television broadcast.

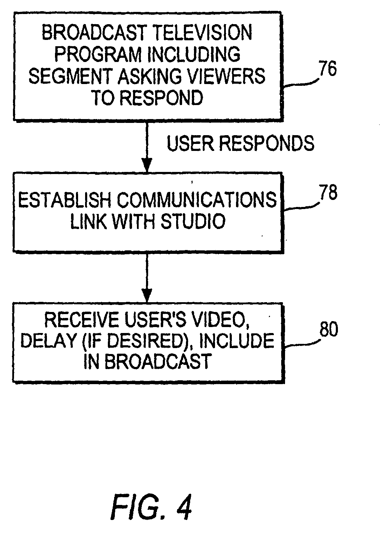

Illustrative steps involved in using a personal computer, user television equipment, or other suitable user equipment for television video conferencing are shown in FIG. 4.

At step 76, studio 12 may broadcast a television program. During the television program, viewers may be asked to place video calls to the studio so that the viewers may provide their views. For example, if the television program is a talk show discussing politics, viewers may be asked to call in and express their political views. The subject of politics is just one illustrative example. Any suitable subject may be discussed if desired.

Viewers may be asked to participate in the television program using any suitable technique. For example, the talent associated with the broadcast television program may make an on-the-air request that viewers participate. On-screen text messages may also be provided that encourage viewers to participate. E-mail messages may be sent to viewers in real time or in advance of the program. The e-mail messages may include promotional material or the like that encourages the viewers to participate. If a viewer has an interactive program guide, a message or promotional content may be provided to the user through the program guide. The message or promotional content may encourage the viewer to participate. The message or promotional content may be targeted to just viewers with equipment that supports this invention, or may be targeted in any other way.

At step 78, when a user responds, a video conference link may be established between personnel at studio 12 and the user's equipment. The video conference link may be bidirectional or may be unidirectional.

At step 80, studio 12 may receive the user's video and may patch the user into the current television signal that is being broadcast. The broadcast television program may be received by home viewers on their televisions. The talent associated with the television program (e.g., a talk-show host or newscaster or the like) may interact with the user in real time. For example, the talent may ask questions of the viewer. The talent may also respond to questions asked by the user.

Equipment such as video equipment 11 may be used to merge the video of the talent or other content and the video of the user into the program. These two video feeds may be provided as part of the broadcast television program using various arrangements. For example, the talent may be presented as part of a full-screen image, whereas the user may be presented in a window (e.g., in the upper right corner of the screen. The video of the talent may be alternated with the video of the user. For example, the video may be used for the party that is speaking. Another approach involves the use of a split screen. With a split screen, the talent may be displayed on the left half of the screen and the user may be displayed on the right half of the screen. These are merely examples. Any suitable approach may be used to merge the user's television video conference video into the broadcast television program. If desired, more than one user's video may be included in the broadcast signal simultaneously

Although this television program is described herein as including talent, the television program could be implemented with one or more users and no talent if desired.

If desired, the broadcast program may use a "tape delay" or other delay arrangement to allow user's comments to be screened. With this type of approach, videos are screened by personnel at studio 12. The television signal that is being broadcast is actually delayed by a short amount of time (e.g., 5 minutes). If a user's comments are inappropriate for broadcasting on a television program, they may be blocked. During blocking, studio 12 plays some of the taped video from the tape delay or other content in place of the viewer's video. With this approach, viewers at home are not presented with any dead time during the broadcast.

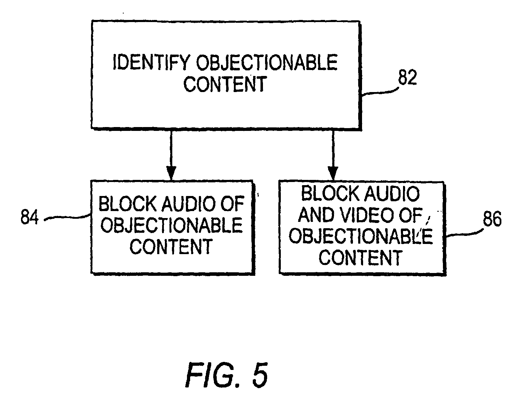

Illustrative steps involved in screening content from users are shown in FIG. 5. At step 82, personnel at studio view the video content of the user as it is being provided by the user over a video conference link. If objectionable content is identified, the audio portion of the objectionable content may be removed from the user's video at step 84. Another suitable approach involves removing both the audio and video components of the objectionable content from the video at step 86. If desired, blocking approaches such as these or other screening processes may be performed in real time or nearly real time. Substitute video and/or audio may be provided, or objectionable portions may be edited out.

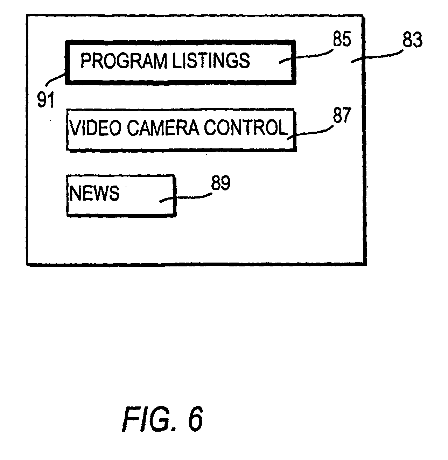

An interactive program guide or other application may be used to provide the user with program schedule information. An illustrative menu screen 83 that may be provided on the user's display is shown in FIG. 6. Various options may be provided using such an arrangement. If option 85 is selected, the program guide or other application may provide the user with an opportunity to select a desired format in which program listings are to be displayed. For example, the program guide may allow the user to request program listings related to sports, movies, comedies, etc.

Option 87 provides access to video camera functions such as special effects, etc. Option 89 allow the user to view a news web site or other news service. These examples are merely illustrative. A program guide or other application implemented using the user equipment may provide any suitable functions if desired.

If the user selects program listings option 85 (e.g., by positioning highlight region 91 on top of the desired item and pressing an enter or OK or select key), the user may be presented with an opportunity to view information that identifies which scheduled television programs support the video call-in feature. All television programs may not support the video call-in feature. For example, only certain popular talk shows may support the feature.

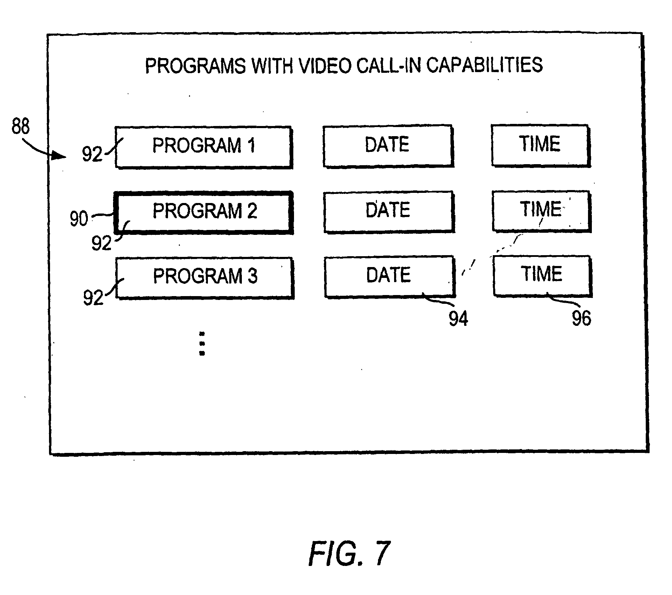

An illustrative screen 88 that may be displayed when the user directs the program guide to display information on scheduled television programs that support the video call-in feature is shown in FIG. 7. In screen 88, the user may be provided with an opportunity to move a movable highlight region 90 on top of a desired program listing 92. For example, the user may wish to select program 2 of FIG. 6 because it is scheduled to be broadcast at a convenient time and is a program in which the user is interested. If desired, screens such as screen 88 or other screens may be provided to provide the user with access to information on the channel of the programs that have television video conferencing, program descriptions (e.g., the scheduled topic of discussion for a talk show), information on the date 94 and time 96 at which each program is scheduled to be broadcast, etc. Alternatively, all programs may be listed with an on-screen indication of those programs that allow video call-in participation.

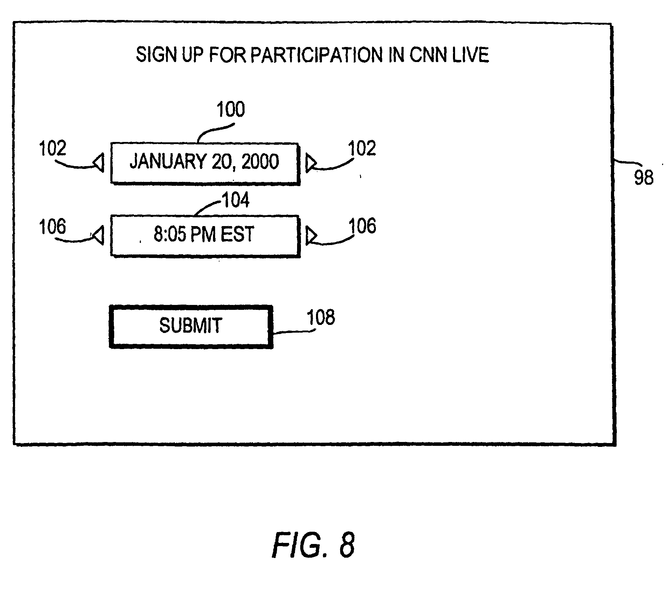

If the user selects a particular show that is scheduled to be broadcast in the future from screen 88, the user may be provided with an opportunity to sign up for a date and time for participating in a video conference. An illustrative screen that may be used for the sign-up procedure is shown in FIG. 8. Screen 98 contains a region 100 that the user may select to choose a desired date for the television video conference. The default date presented in region 100 may be the date on which the program is scheduled to be aired. If the user wishes to schedule another date (e.g., the next day or a day during the next week) the user may use left and right remote control arrow keys on a remote control or other suitable user input interface to direct the program guide or other application to present another date if one is available. The possibility of scrolling left or right to other available dates is indicated by arrows 102.

After the user has selected a desired date, the user may select a desired time at which to participate in the television video conference by pressing a down remote control arrow key on a remote control or other suitable user input interface to select region 104 and then by scrolling through available times displayed in region 104. The possibility of scrolling to other available times is indicated by arrows 106.

After the user has selected a desired time, the user may submit a request to participate in a television video conference for the television program by selecting option 108.

The options of screen 98 are merely illustrative. Any suitable options may be provided that allow the user to sign up for participation in a video call with live talk show or other suitable broadcast television program.

If desired, the user's requests that are formulated using screen 98 of FIG. 8 may be submitted to studio 12 when the user selects the submit option 108. For example, the requests may be sent to studio 12 through communications network 38 and path 54. The program guide or other application may obtain information on which times and dates are available during the initial stages of the sign-up procedure. This is merely illustrative. Any suitable approach may be used to communicate the user's desires to sign up for participating in a television video conference to studio 12.

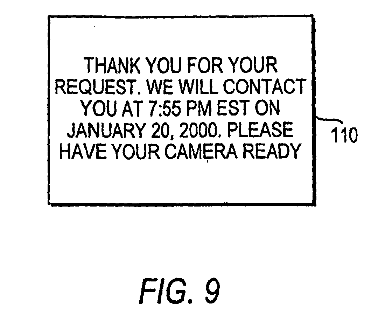

After the user's request has been processed by studio 12, a confirmation message may be provided to the user. An illustrative confirmation message 110 is shown in FIG. 9.

Although FIGS. 8 and 9 illustrate a mechanism through which users may sign up to participate in a video call-in program, the invention may be implemented without requiring a prior request to participate by users.

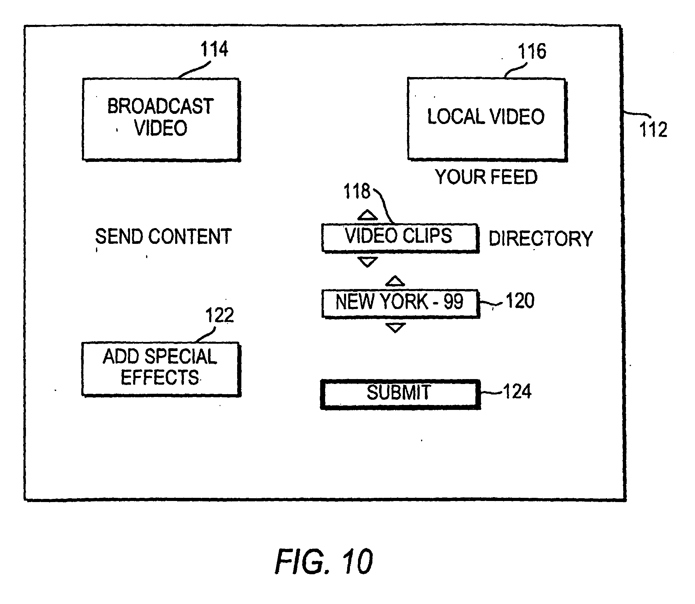

An illustrative screen 112 that may be provided to the user during a television video conference with studio 12 is shown in FIG. 10. The video for the television channel may be shown in broadcast video region 114. If the television channel is being broadcast live, the video in region 114 may reflect the video being broadcast to television viewers by studio 12. If studio 12 is using a short tape delay or the like for screening purposes, the video presented in region 114 will be ahead of the actual broadcast video by a few minutes. The user may monitor the video that is being sent to studio 12 using local video region 116.

If desired, the user may send content of interest to studio 12 (e.g., during the user's participation in the video call to studio 12). The content may be identified by scrolling through the directories (region 118) and files (region 120) that are available on the user's local storage device (e.g., a hard disk drive or the like) in the user's equipment.

Once the content has been identified in regions 118 and 120, the user may select submit option 124 to send this information to the studio. Any suitable information may be sent, including text, graphics, audio, and video. Any suitable technique may be used to send the information, including e-mail or other messaging techniques, uploading the information to a web site, etc.

Special effects may be added to the user's local video by selecting special effects option 112. For example, when the user selects special effects option 112, the user may be provided with a list of special effects options that may be applied to the user's video. Suitable special effects include changing colors, adding boarders, adding music, adding fades, adding wipes, adding text, etc. These are merely illustrative examples. Any suitable techniques for providing special effects may be used if desired.

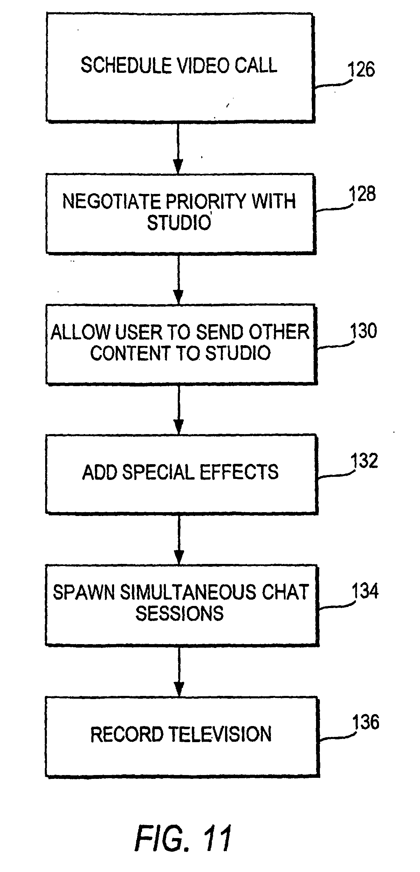

Illustrative steps involved in scheduling and participating in a television video conference are shown in FIG. 11. At step 126, the user may be provided with an opportunity to schedule a video call with a studio. At step 128, the studio may use queuing techniques and the like to resolve contention between various users who would like to sign up for the same time slot. One way in which to resolve contention issues is to require that users sign up only available slots. As. soon as a slot is filled, the remaining users who are still involved in the sign-up process may be notified that the filled slot is not available. Another way in which to resolve contention issues is to place each requesting user in a queue. As each user's turn arises, the user may be patched into the broadcast. Alternatively, users could request time slots and be granted those slots when possible and granted other time slots when not. As stated above, in some embodiments of the invention, scheduling of a video call may not be required and, accordingly, steps 126 and 128 may be omitted if desired.

At step 130, the user may be provided with an opportunity to send content to studio 12, such as text, graphics, video, and audio. If desired, studio 12 may incorporate all or part of this content into the broadcast television signal.

At step 132, the user may be provided with an opportunity to add special effects to the user's local video.

At step 134, the user may be provided with an opportunity to spawn chat sessions. For example, selectable on-screen options may be provided that provide the user with an opportunity to create a chat group, name a chat group, define the class of viewers who may participate in the chat group, participate in the chat group, etc. A chat group may, for example, be supported by a chat server located on the Internet or located at television distribution facility 14.

At step 136, the user may be provided with an opportunity to record the television signal that is being broadcast from studio 12.

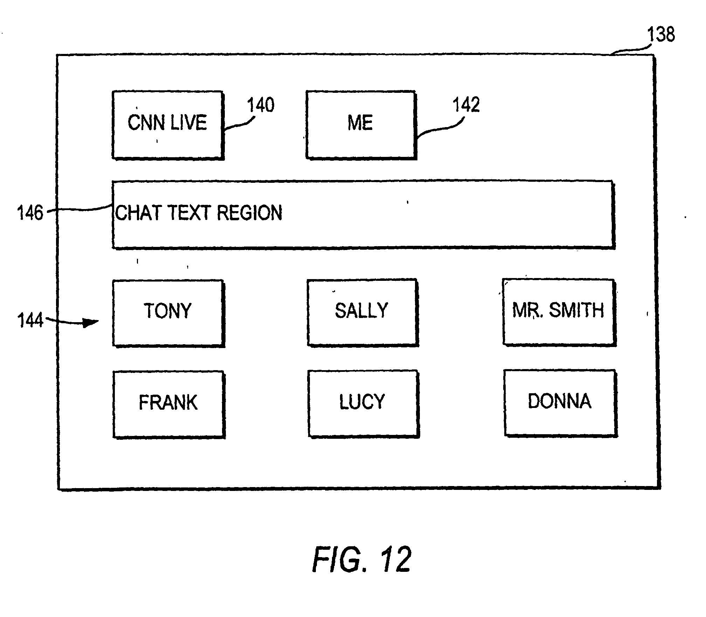

An illustrative screen 138 that may be provided during a chat session is shown in FIG. 12. Screen 138 may contain a video region 140 that includes the video for a given broadcast television program. In region 142, local video may be shown of a user who has been, is currently, or will be a participant in the given program by virtue of a television video conference between the user and studio 12. Region 144 may contain video windows for various chat participants. Each chat participant may be connected together in a real-time chat using a video chat server located, for example, at a television distribution facility such as television distribution facility 14 or a server that is located on the Internet or other communication network. Region 146 may be used to present chat text.

During a typical scenario, the user may schedule a time slot at which to participate in a broadcast television program by a television video conference. The user may also set-up a chat session regarding the broadcast television program and the user's participation in the chat session. During the video conference, the user's local video is displayed in region 142. The user's video is also provided to studio 12, where it is merged into the broadcast television program.

The user's equipment may receive the broadcast television program (including the user's contributed video signal) and may display it in region 140 in real time.

Prior to the user's participation in the broadcast television program, the user may chat with the chat participants whose videos are displayed in the video windows of region 144. The participants other than the user may be provided with chat screens that allow them to view the video of the user and the videos' of the other participants. The audio that accompanies this video may be the audio of the participant who is currently talking. If desired, participants may type in chat text (e.g., using a keyboard, on-screen keyboard, or any other suitable arrangement). This chat text may be displayed in region 146. The audio from region 140 may be muted or presented at a reduced volume to avoid interfering with the chat session.

When the user begins participating in the video broadcast, the user's audio may be muted so as not to interfere with the chat group and the chat group's audio may be muted so as not to interfere with the user during the video conference.

When the video conference is over, the user may rejoin the chat group.

Any user's portion of a chat session may be dynamically incorporated into a television program by the studio at any time.

These are merely examples of the types of chat features that may be provided. Any suitable arrangement may be used to allow the user to participate in chat groups, establish chat groups, provide video for chat groups, etc.

Any of the screen displays of the invention may include advertisements or other on-screen elements, such as logos, current time, current channel, e-mail indicator, etc.

## Claims

1. A method for providing television programs with video conferencing content from home viewers, **characterized by**:
using a studio (12) to provide a broadcast television program that is received and viewed by home viewers;
allowing a given home viewer to participate in a television video conference with the studio (12); and
merging video associated with the broadcast television program with video of the given home viewer and providing the merged video to the home viewers as part of the broadcast television program.

2. The method defined in claim 1 wherein using the studio (12) to provide the broadcast television program comprises using the studio (12) to provide a talk show.

3. The method defined in claim 1 wherein using the studio (12) to provide the broadcast television program comprises using the studio (12) to provide a news program.

4. The method defined in claim 1 wherein the given home viewer has user television equipment (24, 26) and wherein allowing the given home viewer to participate in the television video conference comprises establishing a communications link between the given home viewer and the studio (12) using the user television equipment (24, 26).

5. The method defined in claim 1 wherein the given home viewer has personal computer equipment (20, 22, 44, 46) and wherein allowing the given home viewer to participate in the television video conference comprises establishing a communications link between the given home viewer and the studio (12) using the personal computer equipment (20, 22, 44, 46).

6. The method defined in claim 1 further **characterized by** including a segment in the broadcast television program that asks viewers to participate in a television video conference for the broadcast television program.

7. The method defined in claim 1 wherein the given home viewer has user television equipment (24, 26), the method further comprising receiving video with the user television equipment (24, 26).

8. The method defined in claim 1 wherein the given home viewer has personal computer equipment (20, 22, 44, 46), the method further comprising receiving video with the personal computer equipment (20, 22, 44, 46).

9. The method defined in claim 1 further **characterized by**:
receiving video from the given home viewer; and
screening the received video for inappropriate content.

10. The method defined in claim 1 further **characterized by** allowing the user to invoke an interactive television program guide.

11. The method defined in claim 1 wherein the given home viewer has user equipment (16, 18, 20, 22, 23, 26, 44, 46), the method further comprising:
providing the broadcast television program to the user equipment; and
displaying program schedule information for the broadcast television program to the home viewer on the user equipment (16, 18, 20, 22, 23, 26, 44, 46) in a list of multiple programs that each have video call-in opportunities.

12. The method defined in claim 1 wherein the given home viewer has user equipment, the method further comprising:
providing the broadcast television program to the user equipment (16, 18, 20, 22, 23, 26, 44, 46); and
displaying information to the home viewer on the user equipment (16, 18, 20, 22, 23, 26, 44, 46) that provides the user with an opportunity to sign up for participation in the broadcast television program.

13. The method defined in claim 1 wherein the given home viewer has user equipment, the method further comprising:
providing the broadcast television program to the user equipment (16, 18, 20, 22, 23, 26, 44, 46);
displaying information to the home viewer on the user equipment (16, 18, 20, 22, 23, 26, 44, 46) that provides the user with an opportunity to select when the user can participate in the broadcast television program.

14. The method defined in claim 1 wherein the given home viewer has user equipment (16, 18, 20, 22, 23, 26, 44, 46), the method further comprising:
providing the broadcast television program to the user equipment (16, 18, 20, 22, 23, 26, 44, 46);
displaying information to the home viewer on the user equipment (16, 18, 20, 22, 23, 26, 44, 46) that provides the user with an opportunity to schedule participation in the broadcast television program; and
displaying a confirmation message on the user equipment (16, 18, 20, 22, 23, 26, 44, 46) when the home viewer schedules participation in the broadcast television program.

15. The method defined in claim 1 wherein the given home viewer has user equipment (16, 18, 20, 22, 23, 26, 44, 46), the method further comprising displaying a screen on the user equipment (16, 18, 20, 22, 23, 26, 44, 46) when the home viewer participates in the broadcast television program, wherein the screen includes a video window containing the broadcast television program.

16. The method defined in claim 1 wherein the given home viewer has user equipment (16, 18, 20, 22, 23, 26, 44, 46) to which a video camera (62, 70) is attached, the method further comprising displaying a screen on the user equipment (16, 18, 20, 22, 23, 26, 44, 46) when the home viewer participates in the broadcast television program, wherein the screen includes video for the broadcast television program and video from the video camera (62, 70).

17. The method defined in claim 1 wherein the given home viewer has user equipment (16, 18, 20, 22, 23, 26, 44, 46) and a video camera (62, 70) is attached, the method further comprising using the video camera (16, 18, 20, 22, 23, 26, 44, 46) and user equipment (62, 70) to capture video of the home viewer.

18. The method defined in claim 1 wherein the given home viewer has personal computer equipment (20, 22, 44, 46) and a video camera (62, 70), the method further comprising using the video camera (62, 70) and the personal computer equipment (20, 22, 44, 46) to capture video of the home viewer.

19. The method defined in claim 1 wherein the given home viewer has user equipment (16, 18, 20, 22, 23, 26, 44, 46), the method further comprising using user equipment (16, 18, 20, 22, 23, 26, 44, 46) to provide video clips to the studio (12) over a communications path (13, 54).

20. The method defined in claim 1 wherein the given home viewer has user equipment (16, 18, 20, 22, 23, 26, 44, 46), the method further comprising using the user equipment (16, 18, 20, 22, 23, 26, 44, 46) to provide text to the studio (12) over a communications path (13, 54).

21. The method defined in claim 1 wherein the home viewer has user equipment (16, 18, 20, 22, 23, 26, 44, 46), the method further comprising allowing the user to record television with the user equipment (16, 18, 20, 22, 23, 26, 44, 46).

22. The method defined in claim 1 wherein the home viewer has a personal computer (20, 22, 44, 46) to which a video camera (62, 70) is connected, the method further comprising:
capturing video of the home viewer with the video camera (62, 70);
providing the video to the personal computer (20, 22, 44, 46); and
providing the video from the personal computer (20, 22, 44, 46) to the studio (12) over a communications path (13, 54).

23. The method defined in claim 1, further **characterized by** enabling the given home viewer to participate in a chat session.

24. A system for providing television programs with video conferencing content from home viewers, **characterized in that**:
a studio (12) that provides a broadcast television program that is received and viewed by home viewers, that merges video associated with the broadcast television program with video of a given home viewer, and that provides the merged video to the home viewers as part of the broadcast television program; and
user equipment (16, 18, 20, 22, 23, 26, 44, 46) that allows the given home viewer to participate in the television video conference with the studio (12).

25. The system defined in claim 24 wherein the studio (12) provides the broadcast television program as a talk show.

26. The system defined in claim 24 wherein the studio (12) provides the broadcast television program as a news program.

27. The system defined in claim 24 wherein the user equipment (16, 18, 20, 22, 23, 26, 44, 46) is user television equipment (24, 26) that communicates with the studio (12).

28. The system defined in claim 24 wherein the user equipment (16, 18, 20, 22, 23, 26, 44, 46) is personal computer equipment (20, 22, 44, 46) and wherein the personal computer equipment (20, 22, 44, 46) communicates with the studio (12).

29. The system defined in claim 24 wherein the studio (12) also includes a segment in the broadcast television program that asks viewers to participate in a television video conference for the broadcast television program.

30. The system defined in claim 24 wherein the user equipment (16, 18, 20, 22, 23, 26, 44, 46) transmits video to the studio (12).

31. The system defined in claim 24 wherein the user equipment (16, 18, 20, 22, 23, 26, 44, 46) is personal computer equipment (20, 22, 44, 46) that transmits video to the studio (12).

32. The system defined in claim 24 wherein the studio (12) also receives video from the given home viewer and screens the received video for inappropriate content.

33. The system defined in claim 24 wherein the user equipment (16, 18, 20, 22, 23, 26, 44, 46) also allows the user to invoke an interactive television program guide.

34. The system defined in claim 24 wherein the studio (12) provides the broadcast television program to the user equipment (16, 18, 20, 22, 23, 26, 44, 46), and wherein the user equipment (16, 18, 20, 22, 23, 26, 44, 46) displays program schedule information for the broadcast television program to the home viewer in a list of multiple programs that each have video call-in opportunities.

35. The system defined in claim 24 wherein the studio (12) provides the broadcast television program to the user equipment (16, 18, 20, 22, 23, 26, 44, 46), and the user equipment (16, 18, 20, 22, 23, 26, 44, 46) displays information to the home viewer that provides the user with an opportunity to sign up for participation in the broadcast television program.

36. The system defined in claim 24 wherein the studio (12) provides the broadcast television program to the user equipment (16, 18, 20, 22, 23, 26, 44, 46), and the user equipment (16, 18, 20, 22, 23, 26, 44, 46) displays information to the home viewer that provides the user with an opportunity to select when the user can participate in the broadcast television program.

37. The system defined in claim 24 wherein the studio (12) provides the broadcast television program to the user equipment (16, 18, 20, 22, 23, 26, 44, 46), and the user equipment (16, 18, 20, 22, 23, 26, 44, 46) displays information to the home viewer that provides the user with an opportunity to schedule participation in the broadcast television program and displays a confirmation message when the home viewer schedules participation in the broadcast television program.

38. The system defined in claim 24 wherein the user equipment (16, 18, 20, 22, 23, 26, 44, 46) displays a screen when the home viewer participates in the broadcast television program, wherein the screen includes a video window containing the broadcast television program.

39. The system defined in claim 24 further **characterized in that** a video camera (62, 70) coupled to the user equipment (16, 18, 20, 22, 23, 26, 44, 46), wherein the user equipment (16, 18, 20, 22, 23, 26, 44, 46) displays a screen when the home viewer participates in the broadcast television program, and wherein the screen includes video for the broadcast television program and video from the video camera (62, 70).

40. The system defined in claim 24 further **characterized in that** a video camera (62, 70) that is coupled to the user equipment (16, 18, 20, 22, 23, 26, 44, 46) and that captures video of the home viewer.

41. The system defined in claim 24 wherein the user equipment (16, 18, 20, 22, 23, 26, 44, 46) is personal computer equipment (20, 22, 44, 46), further comprising a video camera (62, 70) that is coupled to the personal computer equipment (20, 22, 44, 46) and that captures video of the home viewer.

42. The system defined in claim 24 wherein the user equipment (16, 18, 20, 22, 23, 26, 44, 46) provides video clips to the studio over a communications path (13, 54).

43. The system defined in claim 24 wherein the user equipment (16, 18, 20, 22, 23, 26, 44, 46) provides text to the studio (12) over a communications path (13, 54).

44. The system defined in claim 24 wherein the user equipment (16, 18, 20, 22, 23, 26, 44, 46) records television.

45. The system defined in claim 24 wherein the user equipment (16, 18, 20, 22, 23, 26, 44, 46) is a personal computer (20, 22, 44, 46), further comprising a video camera (62, 70) that is coupled to the personal computer (20, 33, 44, 46), wherein the video camera (62, 70) captures video of the home viewer and provides the video to the personal computer (20, 22, 44, 46), and wherein the personal computer (20, 22, 4, 46) provides the video to the studio (12) over a communications path (13, 54).

46. The system defined in claim 24, wherein the studio (12) and the user equipment (16, 18, 20, 22, 23, 26, 44, 46) enable the given home viewer to participate in a chat session.

## Patentansprüche

1. Verfahren zum Bereitstellen von Fernsehprogrammen mit Videokonferenz-Inhalt von Heimbetrachtern, **gekennzeichnet durch**:
Verwenden eines Studios (12) zum Bereitstellen eines Fernsehübertragungsprogramms, welches von Heimbetrachtern empfangen und betrachtet wird;
Schaffen der Möglichkeit für einen vorgegebenen Heimbetrachter, an einer Fernsehvideokonferenz mit dem Studio (12) teilzunehmen; und
Mischen eines zu dem Fernsehübertragungsprogramm gehörenden Videos mit einem Video des vorgegebenen Heimbetrachters und Bereitstellen des gemischten Videos für die Heimbetrachter als Teil des Fernsehübertragungsprogramms.

2. Verfahren nach Anspruch 1, wobei beim Verwenden des Studios (12) zum Bereitstellen des Fernsehübertragungsprogramms das Studio (12) verwendet wird, um eine Talkshow bereitzustellen.

3. Verfahren nach Anspruch 1, wobei beim Verwenden des Studios (12) zum Bereitstellen des Fernsehübertragungsprogramms das Studio (12) verwendet wird, um ein Nachrichtenprogramm bereitzustellen.

4. Verfahren nach Anspruch 1, wobei der vorgegebene Heimbetrachter eine Anwender-Fernsehausrüstung (24, 26) besitzt, und wobei beim Schaffen der Möglichkeit für den vorgegebenen Heimbetrachter zur Teilnahme an der Videokonferenz eine Kommunikationsverbindung zwischen dem vorgegebenen Heimbetrachter und dem Studio (12) mittels der Anwender-Fernsehausrüstung (24, 26) aufgebaut wird.

5. Verfahren nach Anspruch 1, wobei der vorgegebene Heimbetrachter eine Personal Computer-Ausrüstung (20, 22, 44, 46) besitzt und wobei bei der Schaffung der Möglichkeit für den vorgegebenen Heimbetrachter zur Teilnahme an der Fernsehvideokonferenz eine Kommunikationsverbindung zwischen dem vorgegebenen Heimbetrachter und dem Studio (12) mittels der Personal Computer-Ausrüstung (20, 22, 44, 46) aufgebaut wird.

6. Verfahren nach Anspruch 1, ferner **dadurch gekennzeichnet, dass** ein Segment in dem Fernsehübertragungsprogramm aufgenommen wird, welches den Betrachter zur Teilnahme an einer Fernsehvideokonferenz für das Fernsehübertragungsprogramm auffordert.

7. Verfahren nach Anspruch 1, wobei der vorgegebene Heimbetrachter eine Anwender-Fernsehausrüstung (24, 26) besitzt, und wobei ferner ein Video mittels der Anwender-Fernsehausrüstung (24, 26) empfangen wird.

8. Verfahren nach Anspruch 1, wobei der vorgegebene Heimbetrachter eine Personal Computer-Ausrüstung (20, 22, 44, 46) besitzt, wobei ferner ein Video mittels der Personal Computer-Ausrüstung (20, 22, 44, 46) empfangen wird.

9. Verfahren nach Anspruch 1, ferner **gekennzeichnet durch**:
Empfangen eines Videos von dem vorgegebenen Heimbetrachter; und
Aussondern von ungeeignetem Inhalt aus dem empfangenen Video.

10. Verfahren nach Anspruch 1, ferner **dadurch gekennzeichnet, dass** für den Benutzer die Möglichkeit geschaffen wird, einen interaktiven Fernsehprogrammführer aufzurufen.

11. Verfahren nach Anspruch 1, wobei der vorgegebene Heimbetrachter eine Anwenderausrüstung (16, 18, 20, 22, 23, 26, 44, 46) besitzt, wobei das Verfahren ferner aufweist:
Bereitstellen des Fernsehübertragungsprogramms für die Anwenderausrüstung; und
Anzeigen von Programmverzeichnisinformation für das Fernsehübertragungsprogramm für den Heimbetrachter auf der Anwenderausrüstung (16, 18, 20, 22, 23, 26, 44, 46) in einer Liste von mehreren Programmen, die jeweils Videoabrufmöglichkeiten aufweisen.

12. Verfahren nach Anspruch 1, wobei der vorgegebene Heimbetrachter eine Anwenderausrüstung besitzt, und wobei das Verfahren ferner aufweist:
Bereitstellen des Fernsehübertragungsprogramms für die Anwenderausrüstung (16, 18, 20, 22, 23, 26, 44, 46); und
Anzeigen von Information für den Heimbetrachter auf der Anwenderausrüstung (16, 18, 20, 22, 23, 26, 44, 46), welche dem Benutzer eine Möglichkeit gibt, sich für eine Teilnahme an dem Fernsehübertragungsprogramm anzumelden.

13. Verfahren nach Anspruch 1, wobei der vorgegebene Heimbetrachter eine Anwenderausrüstung aufweist, und wobei das Verfahren ferner aufweist:
Bereitstellen des Fernsehübertragungsprogramms für die Anwenderausrüstung (16, 18, 20, 22, 23, 26, 44, 46);
Anzeigen von Information für den Heimbetrachter auf der Anwenderausrüstung (16, 18, 20, 22, 23, 26, 44, 46), welche dem Benutzer eine Möglichkeit gibt, auszuwählen, wann der Benutzer an dem Fernsehübertragungsprogramm teilnehmen kann.

14. Verfahren nach Anspruch 1, wobei der vorgegebene Heimbetrachter eine Anwenderausrüstung (16, 18, 20, 22, 23, 26, 44, 46) besitzt, wobei das Verfahren ferner aufweist:
Bereitstellen des Fernsehübertragungsprogramms für die Anwenderausrüstung (16, 18, 20, 22, 23, 26, 44, 46); und
Anzeigen von Information für den Heimbetrachter auf der Anwenderausrüstung (16, 18, 20, 22, 23, 26, 44, 46), welche dem Benutzer eine Möglichkeit gibt, eine Teilnahme an dem Fernsehübertragungsprogramm zeitlich zu planen; und
Anzeigen einer Bestätigungsnachricht auf der Anwenderausrüstung (16, 18, 20, 22, 23, 26, 44, 46), wenn der Heimbetrachter eine Teilnahme an dem Fernsehübertragungsprogramm zeitlich plant.

15. Verfahren nach Anspruch 1, wobei der vorgegebene Heimbetrachter eine Anwenderausrüstung (16, 18, 20, 22, 23, 26, 44, 46) besitzt, und wobei das Verfahren ferner einen Schritt des Anzeigens eines Bildes auf der Anwenderausrüstung (16, 18, 20, 22, 23, 26, 44, 46) aufweist, wenn der Heimbetrachter an dem Fernsehübertragungsprogramm teilnimmt, wobei das Bild ein Videofenster aufweist, welches das Fernsehübertragungsprogramm enthält.

16. Verfahren nach Anspruch 1, wobei der vorgegebene Heimbetrachter eine Anwenderausrüstung (16, 18, 20, 22, 23, 26, 44, 46) besitzt, an welcher eine Videokamera (62, 70) angebracht ist, wobei das Verfahren ferner den Schritt des Anzeigens eines Bildes auf der Anwenderausrüstung (16, 18, 20, 22, 23, 26, 44, 46) aufweist, wenn der Heimbetrachter an dem Fernsehübertragungsprogramm teilnimmt, wobei das Bild ein Video für das Fernsehübertragungsprogramm und ein Video von der Videokamera (62, 70) aufweist.

17. Verfahren nach Anspruch 1, wobei der vorgegebene Heimbetrachter eine Anwenderausrüstung (16, 18, 20, 22, 23, 26, 44, 46) besitzt, an der eine Videokamera (62, 70) angeschlossen ist, wobei das Verfahren ferner den Schritt aufweist, dass die Videokamera (62, 70) und die Anwenderausrüstung (16, 18, 20, 22, 23, 26, 44, 46) verwendet werden, um ein Video von dem Heimbetrachter aufzunehmen.

18. Verfahren nach Anspruch 1, wobei der vorgegebene Heimbetrachter eine Personal Computer-Ausrüstung (20, 22, 44, 46) und eine Videokamera (62, 70) besitzt, wobei das Verfahren ferner den Schritt aufweist, dass die Videokamera (62, 70) und die Personal Computer-Ausrüstung (20, 22, 44, 46) verwendet werden, um ein Video von dem Heimbetrachter aufzunehmen.

19. Verfahren nach Anspruch 1, wobei der vorgegebene Heimbetrachter eine Anwenderausrüstung (16, 18, 20, 22, 23, 26, 44, 46) besitzt, wobei das Verfahren ferner den Schritt aufweist, dass die Anwenderausrüstung verwendet wird, um Videoclips für das Studio über eine Kommunikationsstrecke (13, 54) bereitzustellen.

20. Verfahren nach Anspruch 1, wobei der vorgegebene Heimbetrachter eine Anwenderausrüstung (16, 18, 20, 22, 23, 26, 44, 46) besitzt, wobei das Verfahren ferner den Schritt aufweist, dass die Anwenderausrüstung (16, 18, 20, 22, 23, 26, 44, 46) verwendet wird, um Text für das Studio (12) über eine Kommunikationsstrecke (13, 54) bereitzustellen.

21. Verfahren nach Anspruch 1, wobei der Heimbetrachter eine Anwenderausrüstung (16, 18, 20, 22, 23, 26, 44, 46) besitzt, wobei das Verfahren ferner den Schritt aufweist, dass es dem Benutzer ermöglicht wird, eine Fernsehübertragung mit der Anwenderausrüstung (16, 18, 20, 22, 23, 26, 44, 46) aufzuzeichnen.

22. Verfahren nach Anspruch 1, wobei der Heimbetrachter einen Personal Computer besitzt, an den eine Videokamera (62, 70) angeschlossen ist, wobei das Verfahren ferner aufweist:
Aufnehmen eines Videos von dem Heimbetrachter mit der Videokamera (62, 70);
Bereitstellen des Videos für den Personal Computer (20, 22, 44, 46); und
Bereitstellen des Videos von dem Personal Computer (20, 22, 44, 46) für das Studio (12) über eine Kommunikationsstrecke (13, 54).

23. Verfahren nach Anspruch 1, ferner **dadurch gekennzeichnet, dass** dem vorgegebenen Heimbetrachter die Möglichkeit gegeben wird, an einer Chat-Session teilzunehmen.

24. System zum Bereitstellen von Fernsehprogrammen mit Videokonferenz-Inhalt von Heimbetrachtern, **gekennzeichnet durch**:
ein Studio (12), welches ein Fernsehübertragungsprogramm bereitstellt, das von Heimbetrachtern empfangen und betrachtet wird, welches ein zu dem Fernsehübertragungsprogramm zugehöriges Video mit einem Video eines vorgegebenen Heimbetrachters mischt, und das gemischte Video für den Heimbetrachter als Teil des Fernsehübertragungsprogramms bereitstellt; und
eine Anwenderausrüstung (16, 18, 20, 22, 23, 26, 44, 46), welche es dem vorgegebenen Heimbetrachter ermöglicht, an der Fernsehvideokonferenz mit dem Studio (12) teilzunehmen.

25. System nach Anspruch 24, wobei das Studio (12) das Fernsehübertragungsprogramm als Talkshow bereitstellt.

26. System nach Anspruch 24, wobei das Studio (12) das Fernsehübertragungsprogramm als Nachrichtenprogramm bereitstellt.

27. System nach Anspruch 24, wobei die Anwenderausrüstung (16, 18, 20, 22, 23, 26, 44, 46) eine Anwender-Fernsehausrüstung (24, 26) ist, welche mit dem Studio (12) kommuniziert.

28. System nach Anspruch 24, wobei die Anwenderausrüstung (16, 18, 20, 22, 23, 26, 44, 46) eine Personal Computer-Ausrüstung (20, 22, 44, 46) ist, und wobei die Personal Computer-Ausrüstung (20, 22, 44, 46) mit dem Studio (12) kommuniziert.

29. System nach Anspruch 24, wobei das Studio (12) auch ein Segment in dem Fernsehübertragungsprogramm aufweist, welches die Betrachter auffordert, an einer Fernsehvideokonferenz für das Fernsehübertragungsprogramm teilzunehmen.

30. System nach Anspruch 24, wobei die Anwenderausrüstung (16, 18, 20, 22, 23, 26, 44, 46) ein Video an das Studio (12) überträgt.

31. System nach Anspruch 24, wobei die Anwenderausrüstung (16, 18, 20, 22, 23, 26, 44, 46) eine Personal Computer-Ausrüstung (20, 22, 44, 46) ist, welche ein Video an das Studio (12) überträgt.

32. System nach Anspruch 24, wobei das Studio (12) auch ein Video von dem vorgegebenen Heimbetrachter empfängt und ungeeigneten Inhalt aus dem empfangenen Video aussondert.

33. System nach Anspruch 24, wobei die Anwenderausrüstung (16, 18, 20, 22, 23, 26, 44, 46) es dem Anwender auch ermöglicht, einen interaktiven Fernsehprogrammführer aufzurufen.

34. System nach Anspruch 24, wobei das Studio (12) das Fernsehübertragungsprogramm für die Anwenderausrüstung (16, 18, 20, 22, 23, 26, 44, 46) bereitstellt, und wobei die Anwenderausrüstung (16, 18, 20, 22, 23, 26, 44, 46) eine Programmverzeichnisinformation für das Fernsehübertragungsprogramm für den Heimbetrachter in einer Liste mehrerer Programme bereitstellt, die jeweils eine Videoaufrufmöglichkeit aufweisen.

35. System nach Anspruch 24, wobei das Studio (12) das Fernsehübertragungsprogramm für die Anwenderausrüstung (16, 18, 20, 22, 23, 26, 44, 46) bereitstellt, und wobei die Anwenderausrüstung (16, 18, 20, 22, 23, 26, 44, 46) Information für den Heimbetrachter anzeigt, welche es dem Anwender ermöglicht, sich für eine Teilnahme an dem Fernsehübertragungsprogramm anzumelden.

36. System nach Anspruch 24, wobei das Studio (12) das Fernsehübertragungsprogramm für die Anwenderausrüstung (16, 18, 20, 22, 23, 26, 44, 46) bereitstellt, und wobei die Anwenderausrüstung (16, 18, 20, 22, 23, 26, 44, 46) Information für den Heimbetrachter anzeigt, welche dem Anwender die Möglichkeit gibt, auszuwählen, wann der Anwender an dem Fernsehübertragungsprogramm teilnehmen kann.

37. System nach Anspruch 24, wobei das Studio (12) das Fernsehübertragungsprogramm für die Anwenderausrüstung (16, 18, 20, 22, 23, 26, 44, 46) bereitstellt, und wobei die Anwenderausrüstung (16, 18, 20, 22, 23, 26, 44, 46) Information für den Heimbetrachter anzeigt, welche dem Anwender die Möglichkeit gibt, die Teilnahme an dem Fernsehübertragungsprogramm zeitlich zu planen und eine Bestätigungsnachricht anzeigt, wenn der Heimbetrachter eine Teilnahme an dem Fernsehübertragungsprogramm zeitlich plant.

38. System nach Anspruch 24, wobei die Anwenderausrüstung (16, 18, 20, 22, 23, 26, 44, 46) ein Bild anzeigt, wenn der Heimbetrachter an dem Fernsehübertragungsprogramm teilnimmt, wobei das Bild ein Videofenster aufweist, welches das Fernsehübertragungsprogramm enthält.

39. System nach Anspruch 24, weiter **gekennzeichnet durch** eine Videokamera (62, 70), welche an die Anwenderausrüstung (16, 18, 20, 22, 23, 26, 44, 46) gekoppelt ist, wobei die Anwenderausrüstung (16, 18, 20, 22, 23, 26, 44, 46) ein Bild anzeigt, wenn der Heimbetrachter an dem Fernsehübertragungsprogramm teilnimmt, und wobei das Bild ein Video für das Fernsehübertragungsprogramm und ein Video von der Videokamera (62, 70) aufweist.

40. System nach Anspruch 24, ferner **gekennzeichnet durch** eine Videokamera (62, 70), welche an die Anwenderausrüstung (16, 18, 20, 22, 23, 26, 44, 46) gekoppelt ist und ein Video von dem Heimbetrachter aufnimmt.

41. System nach Anspruch 24, wobei die Anwenderausrüstung (16, 18, 20, 22, 23, 26, 44, 46) eine Personal Computer-Ausrüstung (20, 22, 44, 46) ist, wobei ferner eine Videokamera (62, 70) vorgesehen ist, welche an die Personal Computer-Ausrüstung (20, 22, 44, 46) gekoppelt ist und ein Video von dem Heimbetrachter aufnimmt.

42. System nach Anspruch 24, wobei die Anwenderausrüstung (16, 18, 20, 22, 23, 26, 44, 46) Videoclips für das Studio über eine Kommunikationsstrecke (13, 54) bereitstellt.

43. System nach Anspruch 24, wobei die Anwenderausrüstung (16, 18, 20, 22, 23, 26, 44, 46) Text für das Studio (12) über eine Kommunikationsstrecke (13, 54) bereitstellt.

44. System nach Anspruch 24, wobei die Anwenderausrüstung (16, 18, 20, 22, 23, 26, 44, 46) eine Fernsehübertragung aufzeichnet.

45. System nach Anspruch 24, wobei die Anwenderausrüstung (16, 18, 20, 22, 23, 26, 44, 46) ein Personal Computer (20, 22, 44, 46) ist, wobei ferner eine Videokamera (62, 70) vorgesehen ist, welche an den Personal Computer (20, 33, 44, 46) gekoppelt ist, wobei die Videokamera ein Video des Heimbetrachters aufzeichnet und das Video für den Personal Computer (20, 22, 44, 46) bereitstellt, und wobei der Personal Computer (20, 22, 44, 46) das Video für das Studio (12) über eine Kommunikationsstrecke (13, 54) bereitstellt.

46. System nach Anspruch 24, wobei das Studio (12) und die Anwenderausrüstung (16, 18, 20, 22, 23, 26, 44, 46) es dem vorgegebenen Heimbetrachter ermöglichen, an einer Chat-Sitzung teilzunehmen.

## Revendications

1. Procédé pour doter des programmes de télévision d'un contenu de vidéo-conférence en provenance de téléspectateurs à domicile, **caractérisé par**:
l'utilisation d'un studio (12) pour fournir un programme télédiffusé qui est reçu et vu par les téléspectateurs à domicile;
la possibilité pour un téléspectateur à domicile de participer à une vidéo-conférence télévisée avec le studio (12); et
la fusion de la vidéo associée au programme télédiffusé avec de la vidéo du téléspectateur à domicile donné et la fourniture de la vidéo fusionnée aux téléspectateurs à domicile comme faisant partie du programme télédiffusé.

2. Procédé suivant la revendication 1 dans lequel l'utilisation du studio (12) pour fournir le programme télédiffusé comprend l'utilisation du studio (12) pour fournir un talk-show.

3. Procédé suivant la revendication 1 dans lequel l'utilisation du studio (12) pour fournir le programme télédiffusé comprend l'utilisation du studio (12) pour fournir un programme de nouvelles.

4. Procédé suivant la revendication 1 dans lequel le téléspectateur à domicile donné possède un équipement de télévision personnel (24, 26), et dans lequel la possibilité offerte au téléspectateur à domicile donné de participer à une vidéo-conférence télévisée comprend l'établissement d'un lien de communication entre le téléspectateur à domicile donné et le studio (12) en utilisant l'équipement de télévision personnel (24, 26).

5. Procédé suivant la revendication 1 dans lequel le téléspectateur à domicile donné possède un équipement d'ordinateur individuel (20, 22, 44, 46), et dans lequel la possibilité offerte au téléspectateur à domicile donné de participer à une vidéo-conférence télévisée comprend l'établissement d'un lien de communication entre le téléspectateur à domicile donné et le studio (12) en utilisant l'équipement d'ordinateur individuel (20, 22, 44, 46).

6. Procédé suivant la revendication 1, **caractérisé en outre par** la présence d'un segment dans le programme télédiffusé qui demande aux téléspectateurs de participer à une vidéo-conférence télévisée portant sur le programme télédiffusé.

7. Procédé suivant la revendication 1 dans lequel le téléspectateur à domicile donné possède un équipement de télévision personnel (24, 26), le procédé comprenant en outre la réception de vidéo à l'aide de l'équipement de télévision personnel (24, 26).

8. Procédé suivant la revendication 1 dans lequel le téléspectateur à domicile donné possède un équipement d'ordinateur individuel (20, 22, 44, 46), le procédé comprenant en outre la réception de vidéo à l'aide de l'équipement d'ordinateur individuel (20, 22, 44, 46).

9. Procédé suivant la revendication 1, **caractérisé en outre par**:
la réception de vidéo en provenance du téléspectateur à domicile donné; et
l'examen de la vidéo reçue afin de déceler tout contenu inapproprié.

10. Procédé suivant la revendication 1, **caractérisé en outre par** la possibilité offerte à l'utilisateur d'appeler un guide interactif de programmes de télévision.

11. Procédé suivant la revendication 1 dans lequel le téléspectateur à domicile donné possède un équipement personnel (16, 18, 20, 22, 23, 26, 44, 46), le procédé comprenant en outre:
la fourniture du programme télédiffusé à l'équipement personnel; et
l'affichage d'informations de présentation de programmes pour le programme télédiffusé au téléspectateur à domicile sur son équipement personnel (16, 18, 20, 22, 23, 26, 44, 46) sous la forme d'une liste de programmes multiples présentant chacun des possibilités d'appel de vidéo.

12. Procédé suivant la revendication 1 dans lequel le téléspectateur à domicile donné possède un équipement personnel, le procédé comprenant en outre:
la fourniture du programme télédiffusé à l'équipement personnel (16, 18, 20, 22, 23, 26, 44, 46); et
l'affichage d'informations au téléspectateur à domicile sur son équipement personnel (16, 18, 20, 22, 23, 26, 44, 46) qui offre à l'utilisateur la possibilité de s'inscrire, pour participer au programme télédiffusé.

13. Procédé suivant la revendication 1 dans lequel le téléspectateur à domicile donné possède un équipement personnel, le procédé comprenant en outre:
la fourniture du programme télédiffusé à l'équipement personnel (16, 18, 20, 22, 23, 26, 44, 46), et
l'affichage d'informations au téléspectateur à domicile sur son équipement personnel (16, 18, 20, 22, 23, 26, 44, 46) qui offre à l'utilisateur la possibilité de sélectionner le moment auquel l'utilisateur peut participer au programme télédiffusé.

14. Procédé suivant la revendication 1 dans lequel le téléspectateur donné possède un équipement personnel (16, 18, 20, 22, 23, 26, 44, 46), le procédé comprenant en outre:
la fourniture du programme télédiffusé à l'équipement personnel (16, 18, 20, 22, 23, 26, 44, 46);
l'affichage d'informations au téléspectateur à domicile eur son équipement personnel (16, 18, 20, 22, 23, 26, 44, 46) qui offre à l'utilisateur la possibilité de programmer une participation au programme télédiffusé; et
l'affichage d'un massage de confirmation sur l'équipement personnel (16, 18, 20, 22, 23, 26, 44, 46) lorsque le téléspectateur à domicile programme une participation au programme télédiffusé.

15. Procédé suivant la revendication 1 dans lequel le téléspectateur à domicile donné possède un équipement personnel (16, 18, 20, 22, 23, 26, 44, 46), le procédé comprenant en outre l'affichage d'un écran sur l'équipement personnel (16, 18, 20, 22, 23, 26, 44, 46) lorsque le téléspectateur à domicile participe au programme télédiffusé, dans lequel l'écran comprend une fenêtre vidéo contenant le programme télédiffusé.

16. Procédé suivant la revendication 1 dans lequel le téléspectateur à domicile donné possède un équipement personnel (16, 18, 20, 22, 23, 26, 44, 46) sur lequel une caméra vidéo (62, 70) est fixée, le procédé comprenant en outre l'affichage d'un écran sur l'équipement personnel (16, 18, 20, 22, 23, 26, 44, 46) lorsque le téléspectateur participe au programme télédiffusé, dans lequel l'écran comprend de la vidéo du programme télédiffusé et de la vidéo en provenance de la caméra vidéo (62, 70).

17. Procédé suivant la revendication 1 dans lequel le téléspectateur à domicile donné possède un équipement personnel (16, 18, 20, 22, 23, 26, 44, 46) sur lequel une caméra vidéo (62, 70) est fixée, le procédé comprenant en outre l'utilisation de la caméra vidéo (62, 70) et de l'équipement personnel (15, 18, 20, 22, 23, 26, 44, 46) pour saisir de la vidéo du téléspectateur à domicile.

18. Procédé suivant la revendication 1 dans lequel le téléspectateur à domicile donné possède un équipement d'ordinateur individuel (20, 22, 44, 46) et une caméra vidéo (62, 70), le procédé comprenant en outre l'utilisation de la caméra vidéo (62, 70) et de l'équipement d'ordinateur individuel (20, 22, 44, 46) pour saisir de la vidéo du téléspectateur à domicile.

19. Procédé suivant la revendication 1 dans lequel le téléspectateur à domicile donné possède un équipement personnel (16, 18, 20, 22, 23, 26, 44, 46), le procédé comprenant en outre l'utilisation, de l'équipement personnel (16, 18, 20, 22, 23, 26, 44, 46) pour envoyer des clips vidéo au studio (12) par l'intermédiaire d'une voie de communication (13, 54).

20. Procédé suivant la revendication 1 dans lequel le téléspectateur à domicile donné possède un équipement personnel (16, 18, 20, 22, 23, 26, 44, 46), le procédé comprenant en outre l'utilisation de l'équipement personnel (16, 18, 20, 22, 23, 26, 44, 46) pour envoyer du texte au studio (12) par l'intermédiaire d'une voie de communication (13, 54).

21. Procédé suivant la revendication 1 dans lequel le téléspectateur à domicile possède un équipement personnel (16, 18, 20, 22, 23, 26, 44, 46), le procédé comprenant en outre la possibilité pour l'utilisateur d'enregistrer un programme de télévision à l'aide de l'équipement personnel (16, 18, 20, 22, 23, 26, 44, 46).

22. Procédé suivant la revendication 1 dans lequel le téléspectateur à domicile possède un ordinateur individuel (20, 22, 44, 46) auquel une caméra vidéo (62, 70) est raccordée, le procédé comprenant en outre:
la capture de vidéo du téléspectateur à domicile à l'aide de la caméra vidéo (62, 70);
la fourniture de la vidéo à l'ordinateur individuel (20, 22, 44, 46); et
l'envoi de la vidéo depuis l'ordinateur individuel (20, 22, 44, 46) au studio (12) par l'intermédiaire d'une voie de communication (13, 54).

23. Procédé suivant la revendication 1, **caractérisé en outre par** la possibilité offerte au téléspectateur à domicile donné de participer à une session de bavardage.

24. Système pour doter des programmes de télévision d'un contenu de vidéo-conférence en provenance de téléspectateurs à domicile, **caractérisé par**:
un studio (12) qui fournit un programme télédiffusé qui est reçu et vu par des téléspectateurs à domicile, qui fusionne la vidéo associée au programme télédiffusé avec de la vidéo d'un téléspectateur à domicile donné, et qui fournit la vidéo fusionnée aux téléspectateurs à domicile comme faisant partie du programme télédiffusé; et
un équipement personnel (16, 18, 20, 22, 23, 26, 44, 46) qui offre la possibilité au téléspectateur à domicile donné de participer à la vidéo-conférence télévisée avec le studio (12).

25. Système suivant la revendication 24 dans lequel le studio (12) fournit le programme télédiffusé sous La forme-d'un talk-show.

26. Système suivant la revendication 24 dans lequel le studio (12) fournit le programme télédiffusé sous la forme d'un programme de nouvelles.

27. Système suivant la revendication 24 dans lequel l'équipement personnel (16, 18, 20, 22, 23, 26, 44, 46) est un équipement de télévision personnel (24, 26) qui communique avec le studio (12).

28. Système suivant la revendication 24 dans lequel l'équipement personnel (16, 18, 20, 22, 23, 26, 44, 46) est un équipement d'ordinateur individuel (20, 22, 44, 46) et dans lequel l'équipement 'd'ordinateur individuel (20, 22, 44, 46) communique avec le studio (12).

29. Système suivant la revendication 24 dans lequel le studio (12) comprend en outre un segment dans le programme télédiffusé qui demande aux téléspectateurs de participer à une vidéo-conférence télévisée portant sur le programme télédiffusé.

30. Système suivant la revendication 24 dans lequel l'équipement personnel (16, 18, 20, 22, 23, 26, 44, 46) transmet de la vidéo au studio (12).

31. Système suivant la revendication 24 dans lequel l'équipement personnel (16, 18, 20, 22, 23, 26, 44, 4∈) est un équipement d'ordinateur individuel (20, 22, 44, 46) qui transmet de la vidéo au studio (12).

32. Système suivant la revendication 24 dans lequel le studio (12) reçoit en outre de la vidéo en provenance du téléspectateur à domicile donné et examine la vidéo reçue afin d'y déceler tout contenu inapproprié.

33. Système suivant la revendication 24 dans lequel l'équipement personnel (16, 18, 20, 22, 23, 26, 44, 46) offre en outre la possibilité à l'utilisateur d'appeler un guide interactif de programmes de télévision.

34. Système suivant la revendication 24 dans lequel le studio (12) fournit le programme télédiffusé à l'équipement personnel (16, 18, 20, 22, 23, 26, 44, 46), et dans lequel l'équipement personnel (16, 18, 20, 22, 23, 26, 44, 46) affiche des informations de présentation de programmes pour le programme télédiffusé au téléspectateur à domicile sous la forme d'une liste de programmes multiples présentant chacun des possibilités d'appel de la vidéo.

35. Système suivant la revendication 24 dans lequel le studio (12) fournit le programme télédiffusé à l'équipement personnel (16, 18, 20, 22, 23, 26, 44, 46), et l'équipement personnel (16, 18, 20, 22, 23, 26, 44, 46) affiche des informations au téléspectateur à domicile qui offre à l'utilisateur la possibilité de s'inscrire pour participer au programme télédiffusé.

36. Système suivant la revendication 24 dans lequel le studio (12) fournit le programme télédiffusé à l'équipement personnel (16, 18, 20, 22, 23, 26, 44, 46), et l'équipement personnel (16, 18, 20, 22, 23, 26, 44, 46) affiche des informations au téléspectateur à domicile qui offre à l'utilisateur la possibilité de sélectionner le moment auquel l'utilisateur peut participer au programme télédiffusé.

37. Système suivant la revendication 24 dans lequel le studio (12) fournit le programme télédiffusé à l'équipement personnel (16, 18, 20, 22, 23, 26, 44, 46), et l'équipement personnel (16, 18, 20, 22, 23, 26, 44, 46) affiche des informations au téléspectateur à domicile qui offrent à l'utilisateur la possibilité de programmer une participation au programme télédiffusé, et affiche un message de confirmation lorsque le téléspectateur à domicile programme une participation au programme télédiffusé.

38. Système suivant la revendication 24 dans lequel l'équipement personnel (16, 18, 20, 22, 23, 26, 44, 46) affiche un écran lorsque le téléspectateur à domicile participe au programme télédiffusé, dans lequel l'écran comprend une fenêtre vidéo contenant le programme télédiffusé.

39. Système suivant la revendication 24, **caractérisé en outre en ce qu'**une caméra vidéo (62, 70) est couplée à l'équipement personnel (16, 18, 20, 22, 23, 26, 44, 46), dans lequel l'équipement personnel (16, 18, 20, 22, 23, 26, 44, 46) affiche un écran lorsque le. téléspectateur participe au programme télédiffusé, et dans lequel l'écran comprend de la vidéo du programme télédiffusé et de la vidéo en provenance de la caméra vidéo (62, 70).

40. Système suivant la revendication 24, **caractérisé en outre en ce qu'**une caméra vidéo (62, 70) est couplée à l'équipement personnel (16, 18, 20, 22, 23, 26, 44, 46) et capture de la vidéo du téléspectateur à domicile.

41. Système suivant la revendication 24 dans lequel l'équipement personnel (16, 18, 20, 22, 23, 26, 44, 46) est un équipement d'ordinateur individuel (20, 22, 44, 46) et comprend en outre une caméra vidéo (62, 70) couplée à l'équipement d'ordinateur individuel (20, 22, 44, 46) qui capture de la vidéo du téléspectateur à domicile.

42. Système suivant la revendication 24 dans lequel l'équipement personnel (16, 18, 20, 22, 23, 26, 44, 46) envoie des clips vidéo au studio (12) par l'intermédiaire d'une voie de communication (13, 54).

43. Système suivant la revendication 24 dans lequel l'équipement personnel (16, 18, 20, 22, 23, 26, 44, 46) envoie du texte au studio (12) par l'intermédiaire d'une voie de communication (13, 54).

44. Système suivant la revendication 24 dans lequel l'équipement personnel (16, 18, 20, 22, 23, 26, 44, 46) enregistre des programmes de télévision.

45. Système suivant la revendication 24 dans lequel l'équipement personnel (16, 18, 20, 22, 23, 26, 44, 46) est un équipement d'ordinateur individuel (20, 22, 44, 46) et comprend en outre une caméra vidéo (62, 70) couplée à l'ordinateur individuel (20, 22, 44, 46), dans lequel la caméra vidéo capture de la vidéo du téléspectateur à domicile et fournit la vidéo à l'ordinateur individuel (20, 22, 44, 46), et dans lequel l'ordinateur individuel (20, 22, 44, 46) envoie la vidéo au studio (12) par l'intermédiaire d'une voie de communication (13, 54).

46. Système suivant la revendication 24 dans lequel le studio (12) et l'équipement personnel (16, 18, 20, 22, 23, 26, 44, 46) offrent la possibilité au téléspectateur à domicile donné de participer à une session de bavardage.
